# EUROPEAN PATENT SPECIFICATION

(11) **EP 4 527 703 B1**
(45) Date of publication and mention of the grant of the patent: **05.08.2026**
(21) Application number: 23199042.5
(22) Date of filing: 22.09.2023
(51) Int. Cl.: B60T 13/26, B60T 13/68

(54) **PNEUMATIC BRAKE ARRANGEMENT, VEHICLE COMPRISING SUCH AN ARRANGEMENT AND METHOD FOR PARKING AND UNPARKING SUCH A VEHICLE**
PNEUMATISCHE BREMSANORDNUNG, FAHRZEUG MIT SOLCH EINER ANORDNUNG UND VERFAHREN ZUM EINPARKEN UND AUSPARKEN SOLCH EINES FAHRZEUGS
SYSTÈME DE FREINAGE PNEUMATIQUE, VÉHICULE COMPRENANT UN TEL SYSTÈME ET PROCÉDÉ DE STATIONNEMENT ET DÉBLOCAGE D'UN TEL VÉHICULE

(43) Date of publication of application: 26.03.2025
(73) Proprietor: Volvo Truck Corporation, 405 08 Göteborg (SE)
(72) Inventor: Farres, Lionel, 38540 HEYRIEUX (FR); Travaglia, Carlos Abilio, 82200-300 CURITIBA (BR)
(74) Representative: Lavoix

(56) References cited:
- EP-A1- 3 971 046
- DE-A1- 102007 014 423
- US-A1- 2021 001 824

## Description

### TECHNICAL FIELD

The invention relates generally to vehicles with pneumatically actuated brakes. In particular aspects, the invention relates to a pneumatic brake arrangement for a combination vehicle including a tractor and at least one trailer. The invention also relates to a combination vehicle comprising such an arrangement and to a method for parking and unparking such a vehicle. The invention can be applied to heavy-duty vehicles, such as trucks, buses, and construction equipment, among other vehicle types. Although the invention may be described with respect to a particular vehicle, the invention is not restricted to any particular vehicle.

### BACKGROUND

Cargo vehicle combinations, including a tractor and at least one trailer may reach a total combined gross weight greater than 74 tones. Such is for instance the case for vehicles used for the transportation of sugar cane, which must comply with some regulations such as the CONTRAN resolution 872/21 effective in Brazil since 2021. Other heavy vehicles are used in other industries.

Another heavy vehicle is known from US2021/0001824A1.

An issue with these types of heavy vehicles is that the driver currently has to step out of the truck cabin in order to apply or release the park brakes of the trailer(s).

Another issue is that when a trailer is decoupled from the corresponding tractor, there is a risk that, when connecting two portions of a pneumatic control line, which controls the park brakes of the trailer, air present in an upstream portion of this pneumatic control line might unintentionally release the trailer park brakes.

### SUMMARY

According to a first aspect of the invention, the invention relates to a pneumatic brake arrangement for a combination vehicle including a tractor and at least one trailer, the pneumatic brake arrangement comprising:
- park brakes of the tractor;
- park brakes of the trailer;
- an air production module mounted on the tractor;
- a first pneumatic control line for pneumatically controlling the park brakes of the trailer from the tractor, the first pneumatic control line being divided at least into an upstream first pneumatic control line portion, mounted on the tractor, and a downstream first pneumatic control line portion, mounted on the trailer, and the first control line including a first coupling head mounted on the tractor, at a downstream end of the upstream first pneumatic control line portion, and a second coupling head mounted on the trailer, at an upstream end of the downstream first pneumatic control line portion;
wherein
- the arrangement is configured to, in a given configuration, actuate all park brakes at the same time, on the basis of an braking order received from the tractor cabin; and
- the first coupling head is a vented coupling head, which allows air present in the upstream pneumatic control line portion to be exhausted when the first and second coupling heads are not connected.

The first aspect of the invention may seek to improve the safety of a vehicle. A technical benefit may include that the trailer park brakes of the vehicle do not risk to be unintentionally released when the upstream and downstream portions of the first pneumatic control line are connected, via the first and second coupling heads. Since the first coupling head is vented, no air can accumulate in the upstream first line portion, so that no air can flow into the downstream first line portion upon connection of these line portions via the first and second coupling heads. No air can release the trailer park brakes on this occasion.

Optionally in some examples, including in at least one preferred example, the second coupling head is a vented coupling head, which allows air present in the downstream line pneumatic control portion to be exhausted when the first and second coupling heads are not connected. A technical benefit may include that no air can accumulate in the downstream first pneumatic control line once the first and second coupling heads are disconnected, so that the trailer park brakes remain actuated.

Optionally in some examples, including in at least one preferred example, the pneumatic brake arrangement further comprises:
- service brakes of the tractor;
- service brakes of the trailer;
- a second pneumatic control line for pneumatically controlling the service brakes of the trailer from the tractor, the second pneumatic control line being divided at least into an upstream second pneumatic control line portion, mounted on the tractor, and a downstream second pneumatic control line portion, mounted on the trailer, and the pneumatic control line including a third coupling head mounted on the tractor, at a downstream end of the upstream second pneumatic control line portion, and a fourth coupling head mounted on the trailer, at an upstream end of the downstream second pneumatic control line portion; and
- an air supply line for supplying a pneumatic system of the trailer with power air, the air supply line being divided at least into an upstream air supply line portion, mounted on the tractor, and a downstream air supply line portion, mounted on the trailer, and the control line including a fifth coupling head mounted on the tractor, at a downstream end of the upstream air supply line portion, and a sixth coupling head mounted on the trailer, at an upstream end of the downstream air supply line portion
wherein the third and/or fifth coupling heads are non-vented coupling heads and include a check valve preventing air to escape from the upstream second pneumatic control portion and/or from the upstream air supply line portion, when the third and fourth coupling heads and/or the fifth and sixth coupling heads are not connected.

A technical benefit may include that the brakes of the trailer can be efficiently operated by air received from the tractor via the first and second pneumatic control lines and via the air supply line. The non-vented coupling heads allow keeping air in the tractor, ready to actuate the trailer service brakes and to release the trailer park brakes when necessary.

Optionally in some examples, including in at least one preferred example, the pneumatic brake arrangement is configured for a vehicle including at least a second trailer, wherein:
- the first and second pneumatic control lines and the air supply line extend on the second trailer;
- the first pneumatic control line includes a seventh coupling head mounted on the first trailer, at a downstream end of the downstream first pneumatic control line portion and an eighth coupling head mounted at an upstream end of a further downstream portion of the first pneumatic control line mounted on the second trailer;
- the second pneumatic control line includes a ninth coupling head mounted on the first trailer, at a downstream end of the downstream second pneumatic control line portion and a tenth coupling head mounted at an upstream end of a further downstream portion of the second pneumatic control line mounted on the second trailer;
- the air supply line includes an eleventh coupling head mounted on the first trailer, at a downstream end of the downstream air supply line portion and a twelfth coupling head mounted at an upstream end of a further downstream portion of the air supply line mounted on the second trailer.

A technical benefit may include that a second trailer can be supplied with air for operating its service and park brakes.

Optionally in some examples, including in at least one preferred example, the pneumatic brake arrangement further comprises a first valve arrangement, mounted on the tractor and configured for controlling pneumatic brake actuators of the tractor and a second valve arrangement, mounted on the tractor and configured for controlling pneumatic brake actuators of the trailer through the first pneumatic control line. A technical benefit may include that the two valve arrangements efficiently control all park brakes of the vehicle.

Optionally in some examples, including in at least one preferred example, the first valve arrangement includes a first bi-stable relay valve and first pilot solenoid valves for controlling the first bi-stable relay valve and the second valve arrangement includes a second bi-stable relay valve and second pilot solenoid valves for controlling the second bi-stable relay valve. A technical benefit may include that the relay valves are stable, even in case of problem on the air supply module of the vehicle and that the pilot solenoid valves are efficient for piloting the bi-stable relay valves.

Optionally in some examples, including in at least one preferred example, the pneumatic brake arrangement further comprises:
- a trailer control module mounted on the tractor and providing control air for pneumatic brake actuators of the trailer power air for the service and park brakes of the trailer and possibly auxiliaries;
- an electronic braking system providing control air to the trailer control module for controlling the service brakes of the trailer;
   wherein the trailer control module includes an inversion relay valve supplied with air under pressure from
- the electronic braking system on a first control entry port and
- either the first valve arrangement or a source of air under pressure on a second control entry port,
and wherein the inversion relay valve controls the air supplied to the third coupling head.

A technical benefit may include that the inversion relay valve can take into account several conditions of the vehicle when piloting the trailer brakes.

Optionally in some examples, including in at least one preferred example, the pneumatic brake arrangement further comprises a control solenoid valve arranged on a control line connected to the second entry port of the of the inversion relay valve and supplied with air via a first air conduct connected to the source of air under pressure and via a second conduct connected to the first valve arrangement, wherein the solenoid valve is electronically controlled to switch between a first state, where it connects the source of air under pressure to the second control entry port of the inversion relay valve, and a second state, where it connects the first valve arrangement to the second entry port of the inversion relay valve, and vice-versa. A technical benefit may include that the control solenoid valve allows taking into account a specific condition of the vehicle, e.g. if it is stationary or moving, and to pilot the inversion relay valve accordingly, by switching the control solenoid valve between its first and second state or vice versa.

Optionally in some examples, including in at least one preferred example, the control solenoid valve switches between its first and second states under actuation by an electronic control unit, which also controls the first and second valve arrangements. A technical benefit may include that the electronic control unit efficiently controls the solenoid valve and the first and second valve arrangements.

Optionally in some examples, including in at least one preferred example, the control solenoid valve is located outside the air production module of the vehicle. A technical benefit may include that the solenoid valve is easy to access, in particular for maintenance.

Optionally in some examples, including in at least one preferred example, the pneumatic brake arrangement further comprises a motion sensor located on-board the tractor and delivering an electric signal for controlling the control solenoid valve depending on whether the vehicle is in motion or at standstill. A technical benefit may include that the motion sensor allows adapting the working conditions of the pneumatic brake arrangement, depending on whether or not the vehicle is moving.

Optionally in some examples, including in at least one preferred example, the pneumatic brake arrangement further comprises a sensor delivering a signal exploitable by the ECU to assess if the control solenoid valve is working correctly . A technical benefit may include that sensor allows checking permanently if the solenoid valve works correctly.

According to a second aspect of the invention, the invention relates to a vehicle comprising a tractor, at least one trailer and the pneumatic brake arrangement as described above. The second aspect of the invention may seek to provide a vehicle with improved safety. A technical benefit may include that the park brakes of the trailer are safely controlled.

According to a third aspect of the invention, the invention relates to a method for parking and unparking a combination vehicle including a tractor and at least one trailer, the method comprising at least the following steps:
a) actuating all park brakes of the vehicle, upon parking of the vehicle, by moving a first control device located in a cabin of the tractor in a first direction;
b) releasing the park brakes of the tractor, upon unparking of the vehicle, by moving the first control device in a second direction, different from the first direction; and
c) releasing the park brakes of any trailer coupled to the tractor by actuating a second control device located in the cabin of the tractor.
The second aspect of the invention may seek to provide a method for easily and safely parking and unparking a vehicle. A technical benefit may include that the parking and unparking is safer than with known systems.

Optionally in some examples, including in at least one preferred example, the method further comprises at least the following steps:
d) during parking, assessing if the vehicle is in motion or at standstill;
e) if the result of step d) is that the vehicle is at standstill, keeping the control solenoid valve in its first state and actuating the trailer park brakes, upon parking of the vehicle, by moving a first control device located in a cabin of the tractor in a first direction, without applying the service brake of the trailers;
f) if the result of step d) is that the vehicle is in motion, switching the control solenoid valve to its second state and using the service brakes of the trailer, upon parking of the tractor, by moving the first control device in the first direction.
A technical benefit may include that there is no or little risk of using at the same time the service and park brakes of the trailer when it is already stopped.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the invention as described herein.

### BRIEF DESCRIPTION OF THE DRAWINGS

Examples are described in more detail below with reference to the appended drawings.
**FIG. 1** is an exemplary diagram of a vehicle according to an example of the invention;
**FIG. 2** is a schematic view of a control panel located in a cabin of the vehicle of figure 1 and associated equipment;
**FIG. 3** is a schematic chart of some fluid and electric components of a pneumatic brake arrangement which belongs to the vehicle of figure 1, this arrangement being according to the invention; and
**FIG. 4** shows two types of coupling heads used in the pneumatic arrangement of figure 3 and in the vehicle of figure 1.

### DETAILED DESCRIPTION

The detailed description set forth below provides information and examples of the disclosed technology with sufficient detail to enable those skilled in the art to practice the invention.

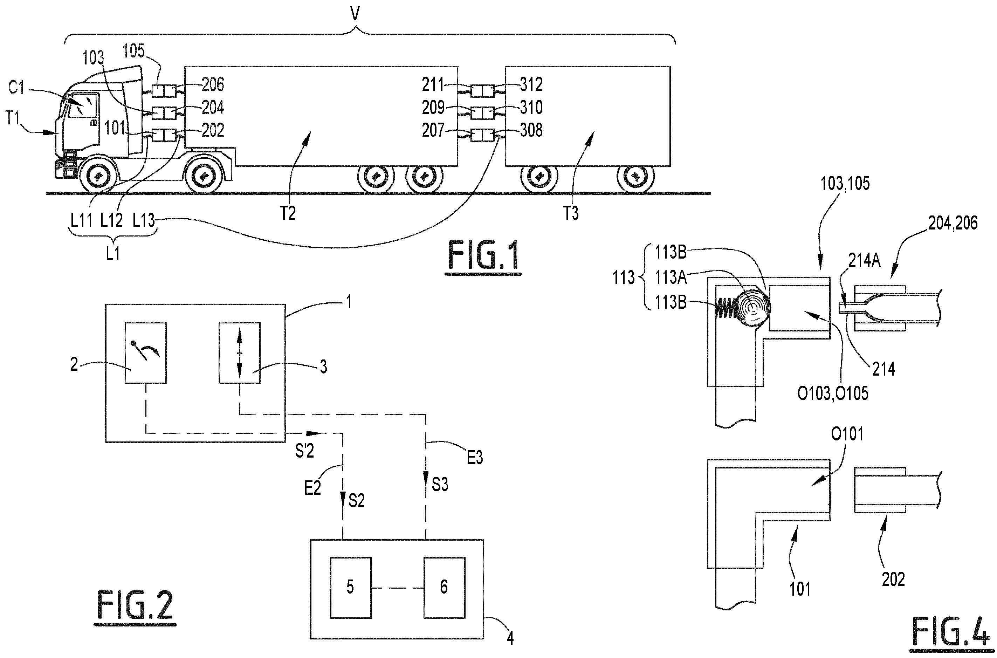

The vehicle V schematically represented in figure 1 includes a tractor T1, a first trailer T2 and a second trailer T3.

In the example of the figures, the first trailer T2 is a semi-trailer and the second trailer is a standard trailer. In a non-represented variant of the invention, the first trailer is a standard trailer. In another non-represented variant of the invention, the number of trailers can be different, in particular equal to one or larger than or equal to three.

The vehicle V can be named a cargo vehicle combination or CVC, as it is designed to carry a load or cargo and as it is made of a combination of several parts T1, T2, T3.

The total combined gross weight of such a vehicle can be larger than 74 tons, in particular when it is used for carrying sugar cane.

The tractor T1 is equipped with front brakes 23 and rear brakes 27, preferably combo-brakes, i.e. brakes that can be used as service brakes and park brakes. These combo-brakes 23 and 27 are respectively actuated via pneumatic brake actuators 24 and 28.

Each brake actuator 24 or 28 includes spring 24A or 24B arranged in a brake chamber 24B or 28B.

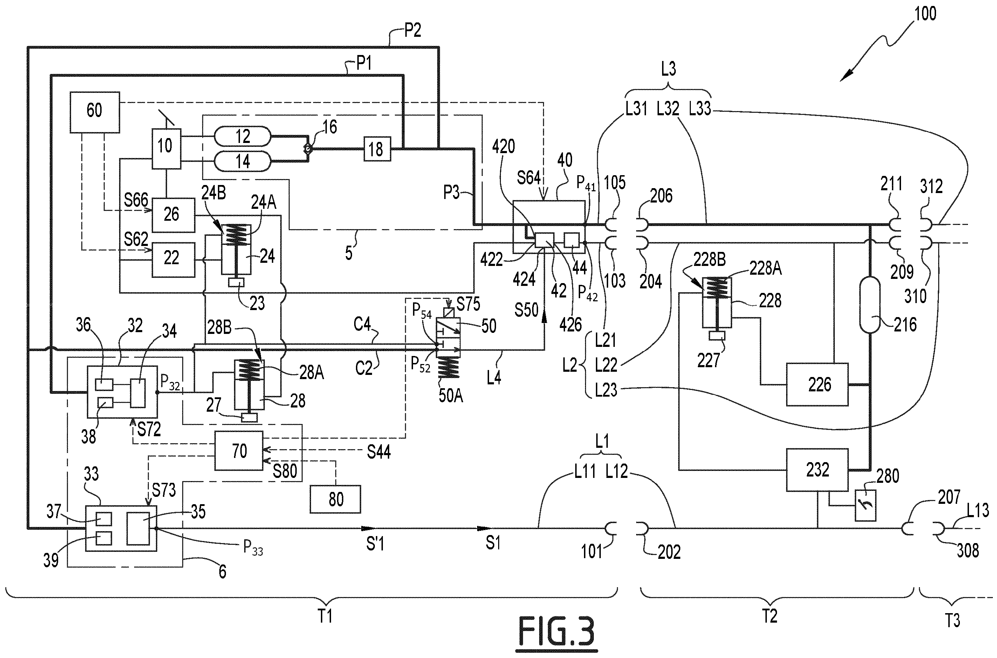

Each trailer T2, T3 is also equipped with combo-spring-brakes 227 actuated by pneumatic brake actuators 228. One combo-spring-brake 227 and one pneumatic brake actuator 228 are represented in figure 3 but, in practice, the first trailer T2 may be equipped with several combo-spring-brakes and several pneumatic brake actuators.

Each brake actuator 228 includes a spring 228A arranged in a brake chamber 228B.

A pneumatic brake arrangement 100, visible in figure 3, is provided on the vehicle V and used to actuate the service brakes and/or the park brakes of the vehicle, 23, 27 and 227, depending on the needs.

This park brake arrangement 100 comprises a first pneumatic control line L1 which is used for controlling the park brakes of the trailers T2, T3, from the tractor T1. This first pneumatic control line is divided into an upstream pneumatic control line portion L11, a downstream pneumatic control line portion L12 and a further downstream pneumatic control line portion L13. The upstream pneumatic control line portion L11 is mounted on the tractor T1, the downstream pneumatic control line portion L12 is mounted on the first trailer T2 and the further downstream pneumatic control line portion L13 is mounted on the second trailer T3. In particular, this first pneumatic control line L1 is used for controlling the pneumatic brake actuators 228 of the first trailer T2 and corresponding, non-represented pneumatic brake actuators of the second trailer T3. In practice, the pneumatic brake actuators 228 and equivalent are controlled by controlling the air pressure in their respective brake chambers 228B.

In the present description and claims, "upstream" and "downstream" are defined according to the direction of flow of air within the pneumatic brake arrangement 100, when air circulates in a pipe, a conduct, a tube, a line or any other part of this arrangement.

Since the components T1, T2 and T3 of the vehicle V can be decoupled from each other, the first pneumatic control line L1 includes some coupling heads for removably connecting the different portions of this first pneumatic control line.

In particular, a first coupling head 101 is provided, on the tractor T1, at a downstream end of the upstream first pneumatic control line portion L11, whereas a second corresponding coupling head 202 is provided on the first trailer T2, at an upstream end of the downstream first pneumatic control line portion L12.

The pneumatic brake arrangement 100 also includes a second pneumatic control line L2 which is used for pneumatically controlling the service brakes of the trailers T2 and T3 from the tractor T1. This second pneumatic control line is also divided into an upstream portion L21, a downstream portion L22 and a further downstream portion L23. The upstream portion L21 is mounted on the tractor T1, the downstream portion L22 is mounted on the first trailer T2 and the further downstream portion L23 is mounted on the second trailer T3.

A third coupling head 103 and a corresponding fourth coupling head 204 are respectively provided, on the tractor T1, at a downstream end of the first portion L21, and on the first trailer T2, at an upstream end of the second portion L22.

The pneumatic brake arrangement 100 also includes an air supply line L3 for supplying the pneumatic park and service brake actuators 228 of the trailers T2, T3 with power air from the tractor T1. Generally speaking, the air supply line L3 supplies a pneumatic system of the first trailer T2 with power air. This pneumatic system might include, in addition to the pneumatic park brake actuators and pneumatic service brake actuators, some other equipment and auxiliaries, such as pneumatic suspensions. This air supply line L3 is divided into an upstream portion L31, a downstream portion L32 and a further downstream portion L33, respectively mounted on the tractor T1, on the first trailer T2 and on the second trailer T3.

A fifth coupling head 105 is mounted on the tractor T1, at a downstream end of the upstream portion L31 and a corresponding sixth coupling head 206 is mounted on the first trailer T2, at an upstream end of the downstream portion L32.

As visible in figure 2, a control panel 1 is mounted within a cabin C1 of the tractor T1 and includes a control lever 2 and a mono-stable electrical switch 3.

In a non-represented variant of the invention, instead of a lever and a mono-stable switch, other control devices can be used in the control panel 1, such as joystick, or a rotating knob.

Elements 2 and 3 are electrically connected to an air production module 4, which supplies control and power air to the service brakes and park brakes of the vehicle V. The air production module 4 includes an air module 5 and an electronic park brake system or EPB 6.

Two electric lines E2 and E3 respectively connect the control lever 2 and the mono-stable switch 3 to the air production module 4. Electric lines E2 and E3 respectively convey electric control signals S2 and S3 delivered by the control lever 2 and the switch 3 to the air production module 4. Preferably, electric lines E2 and E3 belong to electrical networks, for instance a LIN (Local Interconnected Network) network for electrical line 2 and a CAN (Controller Area Network) network for electrical line E3.

When it is pulled by the driver of the tractor T1, that is moved in a first direction, the control lever 2 sends a first signal S2 in order to actuate, i.e. put in an active state, the park brakes of the tractor T1 and the park brakes of any trailer T2, T3 connected to the tractor T1. When it is pushed, i.e. moved in a direction opposite to the previous movement, the control lever 2 sends a second signal S'2 in order to release the park brakes of the tractor T1. This second signal S'2 is different from the first signal S2 and does not induce any change on the park brakes of the trailers.

When it is actuated, the mono-stable switch sends a third signal S3 such that the park brakes of any trailer T2, T3, ... connected to the tractor T1 is released.

In other words, actuation of all park brakes of the vehicle V occurs at the same time, as a consequence of a pulling effort exerted on the control lever 2, which generates the first signal S2. On the other hand, releasing of the park brakes is implemented in two different steps, namely:
- pushing on the control lever 2, that is moving it in a second direction opposite to the first direction, in order to generate the second signal S'2 and release the park brakes of the tractor T1;
- acting on the mono-stable switch 3 in order to generate the third signal S3 and release the park brakes of the trailers T2, T3.

In a non-represented variant of the invention, the second direction of actuation of the lever 2 can be different, but not opposite, to the first direction.

When the trailer T2 is parked for a given period of time, it is possible to interrupt the first pneumatic control line L1, by separating the first and second coupling heads 101 and 202. Generally, this occurs when the first trailer T2 remains stationary, whereas the tractor T1 is moved away from this trailer in order to perform another duty. In such a case, the second control line L2 and the air supply line L3 are also interrupted by separating the third and fourth coupling heads 103 and 204, on the one hand, and the fifth and sixth coupling heads 105 and 206, on the other hand.

In this configuration, the park brake chambers 228B of the pneumatic brake actuators 228 of the first trailer T2 are normally not supplied with control air, so that springs 228A, which belong to the brake actuators 228 of the first trailer, hold the park brakes in an actuated position.

The same occurs for the second trailer T3, which can remain coupled to, or be disconnected from, the first trailer T2, depending on the needs.

A safety issue with such a vehicle is that, when the first trailer T2 needs to be coupled again to the tractor T1 for moving the trailers T2, T3, and when the upstream and downstream portions L11 and L12 of the first pneumatic control line L1 are connected once again after having been disconnected, air present in the upstream portion L11 might flow into the downstream portion L12 and into the park brake chambers 228B of the pneumatic brake actuators 228, which might control the brake actuators 228 in such a way that they release the park brakes of the first trailer T2 and, potentially, the park brakes of any trailer connected to the trailer T2, such as the second trailer T3.

The trailer is then no more parked, whereas the driver is not in a position to drive the vehicle. This is dangerous because the tractor T1 might already be unparked, which has not necessarily been noticed by the driver since the whole vehicle was kept stationary by the trailer park brakes up to the moment when these park brakes have been unintentionally released.

This is all the more dangerous that, when connecting the coupling heads 101 and 202, the driver is working in a shallow space between the tractor T1 and the first trailer T2 and does not have an easy access to the control panel 1.

In order to avoid such a dangerous situation, and as shown in figure 4, the first coupling head 101 is a vented coupling head, i.e. a coupling head without a check valve. Thus, the first coupling head 101 allows air present in the upstream pneumatic control line portion L11 to be exhausted as soon as the first and second coupling heads 101 and 202 are not connected.

Under such circumstances, no air under pressure can accumulate in the upstream portion L11 of the first pneumatic control line L1 when portions L11 and L12 are disconnected from each other.

As visible in figure 4, the first coupling head 101 may be a female coupling head with an opening O101 adapted to accommodate the second coupling head 202, which, in this case, is a male coupling head.

Advantageously, the second male coupling head 202 is also a vented coupling head, i.e. a coupling head without a check valve. Thus, the second coupling head 202 allows air present in the downstream pneumatic control line portion L12 to be exhausted when the first and second coupling heads 101 and 202 are not connected.

According to a non-represented variant of the invention, the first coupling head 101 may be a male coupling head, whereas the second coupling head 202 is a female coupling head.

Advantageously, the third and fifth coupling heads 103 and 105 are each provided with a check valve 113. In other words, they are non-vented coupling heads.

In the example of the figures, the check valve 113 is made by a ball 113A loaded against a seat 113B by a spring 113C.

On the other hand, each one of the fourth or fifth coupling head 204 or 206 is equipped with a pusher 214 configured for separating the ball 113A from the seat 113B when the fourth or sixth coupling head 204 or 206 is inserted into an opening O103 or O105 of the third or fifth coupling head 103 or 105. The pusher 214 is equipped with a central canal 214A. Air can go through the central canal 214A when the third and fourth coupling heads 103 and 204 or the fifth and sixth coupling heads 105 and 206 are connected.

In a non-represented variant of the invention, the check valve 113 of the third and fifth coupling heads 103 and 105 might be of a different type.

In a non-represented variant of the invention, the fourth and/or sixth coupling heads 204 and 206 are also equipped with check valves and the third and/or fifth coupling heads are equipped with corresponding pushers.

In the example of the figures, the third and fifth coupling heads 103 and 105 are female coupling heads and the fourth and sixth coupling heads are male coupling heads.

In another non-represented variant of the invention, the third coupling head 103 and/or the fifth coupling head 105 is a male coupling head, whereas the fourth coupling head 204 and/or the sixth coupling head 206 is a female coupling head.

The fact of having a check valve on the third to sixth coupling heads 103, 105, 204 and 206 avoids losing a potentially important quantity of air, in particular air flowing out of the upstream portion L31 of the air supply line L3 or from the downstream portion L32 of this line because this air supply line is often, in practice, connected to air tanks.

The pneumatic brake arrangement 100 of the invention includes a service brake input device 10.

In the example of the figures, the service brake input device 10 is a pedal module.

The pedal module 10 is connected to two air tanks 12 and 14, both connected to a select-high valve 16, which feeds a pressure limiter 18. As an example, the air pressure within the tanks 12 and 14 may be between 8 and 12 bars and air, with a pressure determined by the pressure limiter 18, e.g. 8.5 bars, is distributed, from the tanks 12 and 14 into three pressurized air lines P1, P2 and P3. The pressure limiter is a source of air under pressure for the other components of the pneumatic brake arrangement 100.

Items 12 to 18 together belong the air module 5.

In figure 3, power air lines containing air at the pressure defined by the pressure limiter 18 are identified with thick lines, by comparison to control air lines identified with thin lines.

The pneumatic brake arrangement 100 also includes a first or front electronic brake system or EBS 22 dedicated to the front service brakes of the truck T1, which are actuated by two pneumatic brake actuators 24.

The pneumatic brake arrangement 100 also includes a second or rear EBS 26 for controlling the rear service brakes of the tractor T1 via two rear pneumatic brake actuators 28.

The electronic park brake system or EPB 6 of the pneumatic brake arrangement 100 includes a first valve arrangement 32 and a second valve arrangement 33.

The first valve arrangement 32 includes a first bi-stable relay valve 34 and two pilot solenoid valves 36 and 38 for controlling the first bi-stable relay valve 34.

On the other hand, the second valve arrangement 33 includes a second bi-stable relay valve 35 and two pilot solenoid valves 37 and 39 for controlling the second bi-stable relay valve 35.

Advantageously, the first and second bi-stable relay valve 34 and 35 are identical and the pilot solenoid valves 36, 37, 38 and 39 are identical.

Each valve arrangement 32 or 33 is electronically controlled by an electronic control unit or ECU 70, via respective control signals S72, S73. Advantageously, the signals S72 and S73 are applied on the pilot solenoid valves 36 to 39 and the ECU 70 belongs to the EPB 6.

The first valve arrangement 32 is supplied with air under pressure via the first pressurized airline P1. An output port P₃₂ of the first valve arrangement 32 is connected to the park brake chambers 24B and 28B of the pneumatic brake actuators 24 and 28. When the first valve arrangement 32 delivers air to the pneumatic brake actuators 24 and 28, the park brakes of the tractor T1 are released. When the first valve arrangement 32 does not provide air to the pneumatic brake actuators 24 and 28, the park brakes of the tractor T1 are actuated, by the springs 24A and 28A located in the chambers 24B and 28B.

The second valve arrangement 33 is supplied with air under pressure via the second pressurized airline P2. Its output port P₃₃ is connected to the first coupling head 101 in order to provide control air to the park brakes of the first trailer T2, as explained here below.

In other words, the output port P₃₃ of the second valve arrangement 33 is connected to the upstream portion L11 of the first pneumatic control line L1.

According to a non-represented variant of the invention, a pressure sensor senses the air pressure at each output port P₃₂ and P₃₃ and is connected to the ECU 70, so that the ECU knows the air pressure at these output ports.

When the coupling heads 101 and 202 are connected and when the second valve arrangement 33 delivers air to the trailer pneumatic brake actuators 228, the park brakes of the first trailer T2 are released. When the second valve arrangement 33 does not provide air to the trailer pneumatic brake actuators 228, the park brakes of the first trailer T2 are actuated, by the spring 228A located in each brake chamber 228B.

On the other hand, the pneumatic brake arrangement 100 includes another electronic control unit or ECU 60, which controls, via respective electronic control signals S62 and S66, the front and rear EBS 22 and 26.

The pneumatic brake arrangement 100 also includes a trailer control module or TCM 40 mounted on the tractor T1 and supplied with air under pressure by the third pressurized airline P3. The ECU 60 controls the TCM via a third electronic control signal S64.

A first output port P₄₁ of the TCM 40 is connected to the upstream portion L31 of the air supply line L3.

The trailer control module 40 also includes an inversion relay valve 42, which is also supplied, on a reference entry port 420, with air under pressure coming from the third pressurized airline P3.

The third electronic control signal 64 controls the inversion relay valve 42 in the TCM 40 in direct way. In other words, the output pressure of the valve 42 varies in the same way as the electronic control signal S64.

In parallel to the first and second EBS 22 and 26, the service brake input device 10 is connected to a first control entry port 422 of the inversion relay valve 42.

The first control port 422 is a direct control port of the inversion relay valve 42. In other words, the pressure of the pneumatic control signal applied of port 422 is delivered on the output port 426.

A second control entry port 424 of the inversion relay valve 42 is connected to an output of a control solenoid valve 50, which, by default, allows pressurized air coming from the second pressurized airline P2 to be applied on the second control entry port 424.

The control solenoid valve 50 is arranged on a fourth pneumatic line L4 connected to the second input port 424 of the inversion relay valve 42. This fourth pneumatic line L4 is a control line for the inversion relay valve 42.

The fourth pneumatic line L4 runs outside the air production module 5. Thus, the control solenoid valve 50 is located outside the air production module 4 and easy to access.

Alternatively, the control solenoid valve 50 is integrated in the air production module 4.

An output port 426 of the inversion relay valve 42 is connected to a second output port P₄₂ of the trailer control module 40, which is connected to the upstream portion L21 of the second pneumatic control line L2.

The relay valve 42 is an inversion relay valve. In other words, the pressure level on its output port 426 decreases when the pressure on its second control entry port 424 increases. In particular, the relative pressure at the output port 426, thus in the upstream portion L21, equals 0 when a pressure between 8 and 10 bars is applied on the second control entry 424.

On the other hand, the first trailer T2 is equipped with an air tank 216, a service brake relay valve 226 and a park brake relay valve 232.

The air tank is connected to the downstream portion L32 of the air supply line L3 and feeds the two relay valves 226 and 232 with air under pressure coming from the pressure limiter 18 when the fifth and sixth coupling heads 105 and 206 are connected. These two relay valves 226 and 232 allow piloting the brakes of the first trailer L2, via their respective pneumatic brake actuators 228.

In addition, a control lever 280 is mounted on the second trailer T2, for instance near the upstream end of the downstream portions of the lines L1, L2 and L3 and allows an operator, such as the driver, to manually operate the park brakes of the trailer T2 when needed. The same applies to T3.

When coupling heads 101 and 202, 103 and 204, 105 and 206 are respectively coupled and when the vehicle V is in motion, actuation of the service brakes via the service brake input device 10 occurs through the first and second EBS 22 and 26 and via the service brake relay valve 226 controlled through the second pneumatic control line L2 from the trailer control module 40. The inversion relay valve 42 transmits the air pressure received on its first control port 422 to the upstream portion L21 of the second pneumatic control line L2. The relay valve 226 controls the service brakes of the trailer T2 accordingly.

When it is necessary to park the vehicle V, the driver pulls on the control lever 2. This is signaled to the air production module 4 via the signal S2. On this basis, the ECU 70 also controls the first and second valve arrangements 32 and 33 via the signals S72 and S73, in order to actuate the rear park brakes of the tractor T1, via their pneumatic actuators 24 and 28, and to send a pneumatic signal S1, reducing the pressure on the first pneumatic control line L1, to the park brake relay valve 232 of the first trailer T2 for actuating the pneumatic brake actuators 228 of the trailer. When the pressure of the pneumatic signal S1 in L1 is reduced to "zero", the relay valve 232 vents the park brake chambers 228B of all pneumatic air actuators 228 to the atmosphere, so that the park brakes of the trailer T2 are applied. In other words, when the drivers pulls on the control lever 2, he actuates all pneumatic park brake actuators 24, 28 and 228, respectively on the tractor T1 and on the first trailer T2.

Release of the park brakes, so that they are applied by their respective springs, occurs in two successive steps.

In a first step, the driver pushes on the control lever 2. This is signaled to the air production module 4 via the signal S'2. The ECU 70 controls the first valve arrangement 32 via the signal S72, in order to release the park brakes of the tractor T1 via the pneumatic brake actuators 24 and 28, by adding pressure to the park brake chambers of these actuators. No action is performed on the trailer park brakes in this step. In other words, the ECU 70 does not change the signal S73 sent to the second valve arrangement 33. In a second step, when the driver moves the mono-stable switch 3, this is signaled to the air production module 4 via the signal S3. On this basis, the ECU 70 controls the second valve arrangement 33 via the signal S73, to send on the first pneumatic control line L1 a pneumatic signal S'1 to the park brake relay valve 232 of the first trailer T2. When it receives the pneumatic signal S' 1, the relay valve 232 provides the park brake chambers of all pneumatic air actuators 228 with air under pressure coming from the air tank 216, so that the park brakes of the trailer T2 are released.

In other words, two actions of the driver are necessary to release all park brakes of the vehicle V, first on the lever 2, then on the switch 3. This improves the safety of the unparking procedure of the vehicle V.

Another issue is that, without specific precautions, when the vehicle V is at standstill, the trailer is at risk of being parked through a double action of the service brakes actuated by the service brake relay valve 226 and through the park brakes actuated by the park brake relay valve 232.

This is why the inversion relay valve 42 is integrated in the trailer control module 40 and the solenoid valve 50 is installed between the EPB 6 and the trailer control module 40.

A first conduct C2 connects the pressurized line P2 to a first entry port P₅₂ of the control solenoid valve 50.

By default, the control solenoid valve 50 connects the pressurized airline P2 and the first conduct C21 to the second control entry port 424 of the inversion relay valve 42. In other words, when it is not actuated by the ECU 70, the control solenoid valve 50 is pushed by a spring 50A in a first state where it applies air under pressure coming through the first conduct C2 from the pressure regulator 18, at 8.5 bars, on the second control entry port 424.

A second conduct C4 connects the output port P32 to a second entry port P₅₄ of the control solenoid valve 50.

When it is actuated by the ECU 70 via a signal S75, the control solenoid valve 50 connects the output port P₃₂ of the first valve arrangement 32 and the second conduct C4 to the second control entry port 424 of the inversion relay valve 42.

In other words, the control solenoid valve 50 applies on the second control port 424 of the inversion relay valve 42 a pneumatic control signal S50, which is equal to the pressure delivered by the pressure limiter, that is about 8.5 bars, when the control solenoid valve is in its first state, and equal to the output pressure of the first valve arrangement 32, when the solenoid valve is in its second state.

As the control solenoid valve 50 is, by default, in its first state, the entry port 424 is by default under a pressure of about 8.5 bars and, because of the inversion capability of the inversion relay valve 42, the relative pressure level at the output port 426 is by default equal to 0. This first state of the inversion relay valve 42 is held when the tractor park brake is actuated at standstill. In such a case, the first trailer T2 is parked only by the actuation of the pneumatic brake actuator 228 via the park brake relay valve 232 controlled by the first pneumatic control line L1. The service brakes of the trailer T2 are not used.

The pressure level at the output port 426 is always equal to the maximum pressure requested via the first and second control ports 422, 424 and via the electronic control signal S64, taking into account that the second control port is an inverted port for the valve 42.

When the parking brake is used by the driver when the vehicle V is in motion, it is preferred that both the service brakes of the trailer T2 and the park brakes of the tractor T1 cooperate to decelerate the vehicle and come to a standstill, prior to parking the tractor T1, the first trailer T2, and the second trailer T3 when it is present. When such a situation is detected, e.g. by a speedometer, an accelerator or any other motion sensor 80 mounted onboard the tractor T1 and delivering an output signal S80 to the ECU 70, the electronic control unit 70 is informed of the situation and applies the signal S75 on the control solenoid valve 50 in order to switch it from its first state to its second state, where it connects the output of the first valve arrangement 32 to the second control entry port 424 of the inversion relay valve 42.

In such a second state of the control solenoid valve 50, a relatively low pressure is applied on the second control entry port 424. Thus, the air pressure at the output port 426 equals the pressure requested via the port 424. In particular, if the air pressure applied at the second control port 424 is zero, then the air pressure at the output port 426 equals the air pressure applied at the reference entry port 420, that is 8.5 bars.

When the first valve arrangement 32 is operated to actuate the park brakes of the tractor T1, the relative pressure level at the output of the first valve arrangement 32 is 0 or almost 0 so that, in the second state of the control solenoid valve 50, no air pressure or almost no air pressure is applied on the second control entry port 424 of the inversion relay valve 42.

Thus, when a motion sensor 80 detects that the vehicle is in motion, the control solenoid valve 50 is switched to its second state by the ECU 70, which allows controlling the service brakes of the first trailer T2 via the TCM 40.

When the ECU 70 stops applying the signal S75, the solenoid valve 50 switches back to its first state.

According to an optional aspect of the invention, a pressure sensor 44 can be mounted in the trailer control module 40, downstream of the output port 426 of the inversion relay valve 42.

This pressure sensor 44 can communicate with the ECU 70 and provide a signal S44 representative of the air pressure level on the output side of the inversion relay valve 42.

This allows the ECU 70 to detect a potential failure of the control solenoid valve 50. If no signal S75 is applied on the control solenoid valve 50 and if the pressure sensor 44 detects a non-zero air pressure value, in particular a pressure value variable depending on the action of the driver on the service brake device 10, this means that the control solenoid valve 50 has wrongly switched to its second state. Conversely, if the signal S75 is applied on the control solenoid valve 50 and if the pressure sensor 44 detects no air pressure, whereas the service brake input device 10 is used by the driver, this means that the control solenoid valve 50 probably remains in its first state. In other words, the signal S44 received by the ECU 70 from the pressure sensor 44 allows assessing whether the control solenoid valve 50 works correctly or not.

The connection between the downstream portions L21, L22 and L32 and the further downstream portions L13, L23 and L33 of the three lines L1, L2 and L3, occur respectively via
- a seventh coupling head 207 mounted on the first trailer T2, at a downstream end of the downstream first pneumatic control line portion L12 and a corresponding eighth coupling head 308 mounted at an upstream end of the further downstream portion L13 of the first pneumatic control line mounted on the second trailer T3,
- a ninth coupling head 209 mounted on the first trailer T2, at a downstream end of the downstream second pneumatic control line portion L22 and a tenth coupling head 310 mounted at an upstream end of a further downstream portion L23 of the second pneumatic control line L2 mounted on the second trailer T3, and
- an eleventh coupling head 211 mounted on the first trailer, at a downstream end of the downstream air supply line portion L32 and a twelfth coupling head 312 mounted
at an upstream end of a further downstream portion L33 of the air supply line mounted on the second trailer T3.

The seventh coupling head 207 is advantageously equipped with a manual tap, which allows the driver to check is pressurized air is present at the seventh coupling head 207 before connecting it to the eighth coupling head 308.

The eighth coupling head 308 is advantageously vented, for the same reasons as the first and second coupling heads 101 and 202.

The ninth, tenth, eleventh and twelfth coupling heads 209, 310, 211 and 312 are advantageously non-vented, for the same reasons as the third to sixth coupling heads 103, 204, 105 and 206.

The invention is described here above when the vehicle is equipped with combo brakes 23, 27, 227 controlled by the pneumatic actuators 24, 28 and 228 both for service braking and for park braking. In an alternative embodiment, the service and park brakes are separated and may be controlled by separated pneumatic actuators.

The terminology used herein is for the purpose of describing particular aspects only and is not intended to be limiting of the invention. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present invention.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this invention belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present invention is not limited to the aspects described above and illustrated in the drawings; rather, the skilled person will recognize that many changes and modifications may be made within the scope of the present invention and appended claims. In the drawings and specification, there have been disclosed aspects for purposes of illustration only and not for purposes of limitation, the scope of the invention being set forth in the following claims.

## Claims

1. A pneumatic brake arrangement (100) for a combination vehicle including a tractor (T1) and at least one trailer (T2, T3), the pneumatic brake arrangement comprising:
- park brakes (23, 27) of the tractor;
- park brakes (227) of the trailer;
- an air production module (5) mounted on the tractor;
- a first pneumatic control line (L1) for pneumatically controlling the park brakes (227) of the trailer from the tractor,
the arrangement being configured to, in a given configuration, actuate all park brakes (23, 27, 227) at the same time, on the basis of an braking order (S₂) received from the tractor cabin (C1);
**characterized in that**
- the first pneumatic control line is divided at least into an upstream first pneumatic control line portion (L11), mounted on the tractor, and a downstream first pneumatic control line portion (L12), mounted on the trailer, and the first control line including a first coupling head (101) mounted on the tractor, at a downstream end of the upstream first pneumatic control line portion, and a second coupling head (202) mounted on the trailer, at an upstream end of the downstream first pneumatic control line portion; and
- the first coupling head (101) is a vented coupling head, which allows air present in the upstream pneumatic control line portion (L11) to be exhausted when the first and second coupling heads (101, 202) are not connected.

2. The pneumatic brake arrangement (100) of claim 1, wherein the second coupling head (202) is a vented coupling head, which allows air present in the downstream line pneumatic control portion to be exhausted when the first and second coupling heads (101, 202) are not connected.

3. The pneumatic brake arrangement (100) of one of claims 1 and 2, further comprising:
- service brakes (23, 27) of the tractor (T1);
- service brakes (227) of the trailer (T2, T3);
- a second pneumatic control line (L2) for pneumatically controlling the service brakes (227) of the trailer from the tractor, the second pneumatic control line being divided at least into an upstream second pneumatic control line portion (L21), mounted on the tractor, and a downstream second pneumatic control line portion (L22), mounted on the trailer, and the pneumatic control line including a third coupling head (103) mounted on the tractor, at a downstream end of the upstream second pneumatic control line portion, and a fourth coupling head (204) mounted on the trailer, at an upstream end of the downstream second pneumatic control line portion; and
- an air supply line (L3) for supplying a pneumatic system of the trailer with power air, the air supply line being divided at least into an upstream air supply line portion (L31), mounted on the tractor, and a downstream air supply line portion (L32), mounted on the trailer, and the control line including a fifth coupling head (105) mounted on the tractor, at a downstream end of the upstream air supply line portion, and a sixth coupling head (206) mounted on the trailer, at an upstream end of the downstream air supply line portion
wherein the third and/or fifth coupling heads (103, 105) are non-vented coupling heads and include a check valve (113) preventing air to escape from the upstream second pneumatic control portion (L21) and/or from the upstream air supply line portion (L31), when the third and fourth coupling heads (103, 204) and/or the fifth and sixth coupling heads (105, 206) are not connected.

4. The pneumatic brake arrangement (100) of claim 3, configured for a vehicle (V) including at least a second trailer (T3), wherein:
- the first and second pneumatic control lines (L1, L2) and the air supply line (L3) extend on the second trailer;
- the first pneumatic control line (L1) includes a seventh coupling head (207) mounted on the first trailer (T2), at a downstream end of the downstream first pneumatic control line portion (L12) and an eighth coupling head (308) mounted at an upstream end of a further downstream portion (L13) of the first pneumatic control line mounted on the second trailer (T3);
- the second pneumatic control line (L2) includes a ninth coupling head (209) mounted on the first trailer, at a downstream end of the downstream second pneumatic control line portion (L22) and a tenth coupling head (310) mounted at an upstream end of a further downstream portion (L32) of the second pneumatic control line mounted on the second trailer;
- the air supply line (L3) includes an eleventh coupling head (211) mounted on the first trailer, at a downstream end of the downstream air supply line portion (L32) and a twelfth coupling head (312) mounted at an upstream end of a further downstream portion (L33) of the air supply line mounted on the second trailer.

5. The pneumatic brake arrangement (100) of any preceding claim, further comprising:
- a first valve arrangement (32), mounted on the tractor and configured for controlling pneumatic brake actuators (24, 28) of the tractor (T1) ;
- a second valve arrangement (33), mounted on the tractor and configured for controlling pneumatic brake actuators (228) of the trailer (T2) through the first pneumatic control line (L1).

6. The pneumatic brake arrangement (100) of claim 5, wherein
- the first valve arrangement (32) includes a first bi-stable relay valve (34) and first pilot solenoid valves (36, 38) for controlling the first bi-stable relay valve; and
- the second valve arrangement (33) includes a second bi-stable relay valve (35) and second pilot solenoid valves (37, 39) for controlling the second bi-stable relay valve.

7. The pneumatic brake arrangement (100) of claim 3 combined with one of claims 5 and 6, further comprising:
- a trailer control module (40) mounted on the tractor (T1) and providing control air for pneumatic brake actuators (228) of the trailer power air for the service and park brakes (227) of the trailer and possibly auxiliaries;
- an electronic braking system (22) providing control air to the trailer control module for controlling the service brakes of the trailer;
wherein the trailer control module (40) includes an inversion relay valve (42) supplied with air under pressure from
- the electronic braking system (22) on a first control entry port (422) and
- either the first valve arrangement (32) or a source (18) of air under pressure on a second control entry port (424),
and wherein the inversion relay valve (42) controls the air supplied to the third coupling head (103).

8. The pneumatic brake arrangement (100) of claim 7, further comprising a control solenoid valve (50) arranged on a control line (L4) connected to the second entry port (424) of the of the inversion relay valve (42) and supplied with air via a first air conduct (C2) connected to the source (18) of air under pressure and via a second conduct (C4) connected to the first valve arrangement (32), wherein the solenoid valve (50) is electronically controlled (S75) to switch between a first state, where it connects the source of air under pressure (18) to the second control entry port (424) of the inversion relay valve, and a second state, where it connects the first valve arrangement (32) to the second entry port of the inversion relay valve, and vice-versa.

9. The pneumatic brake arrangement (100) of claim 8, wherein the control solenoid valve (50) switches between its first and second states under actuation by an electronic control unit (70), which also controls the first and second valve arrangements (32, 33).

10. The pneumatic brake arrangement (100) of any one of claims 8 and 9, wherein the control solenoid valve (50) is located outside the air production module (4) of the vehicle (V).

11. The pneumatic brake arrangement (100) of any one of claims 8 to 10, further comprising a motion sensor (80) located on-board the tractor (T1) and delivering an electric signal (S80) for controlling the control solenoid valve (50) depending on whether the vehicle (V) is in motion or at standstill.

12. The pneumatic brake arrangement (100) of any one of claims 8 to 11, further comprising a sensor (44) delivering a signal (S₄₄) exploitable by the ECU (70) to assess if the control solenoid valve (50) is working correctly .

13. A vehicle (V) comprising a tractor (T1), at least one trailer (T2, T3) and the pneumatic brake arrangement (100) according to any preceding claim.

14. A method for parking and unparking a combination vehicle (V) including a tractor (T1) and at least one trailer (T2), the method comprising at least the following step:
a) actuating all park brakes (23, 27, 227) of the vehicle, upon parking of the vehicle, by moving a first control device (2) located in a cabin (C1) of the tractor (T1) in a first direction;
**characterized in that** the method also comprises at least the following steps:
b) releasing the park brakes of the tractor (T1), upon unparking of the vehicle, by moving the first control device (2) in a second direction, different from the first direction; and
c) releasing the park brakes of any trailer (T2, T3) coupled to the tractor by actuating a second control device (3) located in the cabin of the tractor.

15. The method of claim 14, implemented with a vehicle (V) incorporating a pneumatic brake arrangement (100) according to one of claims 8 to 12, wherein the method further comprises at least the following steps:
d) during parking, assessing (S80) if the vehicle is in motion or at standstill;
e) if the result of step d) is that the vehicle (V) is at standstill, keeping the control solenoid valve (50) in its first state and actuating the trailer park brakes (228), upon parking of the vehicle, by moving a first control device (2) located in a cabin (C1) of the tractor (T1) in a first direction, without applying the service brake of the trailers;
f) if the result of step d) is that the vehicle is in motion, switching (S75) the control solenoid valve (50) to its second state and using the service brakes of the trailer (T2, T3), upon parking of the tractor (T1), by moving the first control device (2) in the first direction.

## Patentansprüche

1. Eine pneumatische Bremsanordnung (100) für eine Fahrzeugkombination, die ein Zugfahrzeug (T1) und mindestens einen Anhänger (T2, T3) umfasst, wobei die pneumatische Bremsanordnung umfasst:
- Feststellbremsen (23, 27) des Zugfahrzeugs;
- Feststellbremsen (227) des Anhängers;
- ein Lufterzeugungsmodul (5), das an dem Zugfahrzeug montiert ist;
- eine erste pneumatische Steuerleitung (L1) zum pneumatischen Steuern der Feststellbremsen (227) des Anhängers von dem Zugfahrzeug aus,
wobei die Anordnung konfiguriert ist, in einer gegebenen Konfiguration alle Feststellbremsen (23, 27, 227) gleichzeitig auf der Grundlage eines Bremsbefehls (S₂), der von der Zugfahrzeugkabine (C1) empfangen wird, zu betätigen;
**dadurch gekennzeichnet, dass**
- die erste pneumatische Steuerleitung mindestens in einen stromaufwärtigen ersten pneumatischen Steuerleitungsabschnitt (L11), der an dem Zugfahrzeug montiert ist, und einen stromabwärtigen ersten pneumatischen Steuerleitungsabschnitt (L12), der an dem Anhänger montiert ist, unterteilt ist, und wobei die erste Steuerleitung einen ersten Kupplungskopf (101), der an dem Zugfahrzeug an einem stromabwärtigen Ende des stromaufwärtigen ersten pneumatischen Steuerleitungsabschnitts montiert ist, und einen zweiten Kupplungskopf (202), der an dem Anhänger an einem stromaufwärtigen Ende des stromabwärtigen ersten pneumatischen Steuerleitungsabschnitts montiert ist, umfasst; und
- der erste Kupplungskopf (101) ein entlüfteter Kupplungskopf ist, der ermöglicht, dass in dem stromaufwärtigen pneumatischen Steuerleitungsabschnitt (L11) vorhandene Luft abgelassen wird, wenn der erste und der zweite Kupplungskopf (101, 202) nicht verbunden sind.

2. Die pneumatische Bremsanordnung (100) nach Anspruch 1, wobei der zweite Kupplungskopf (202) ein entlüfteter Kupplungskopf ist, der ermöglicht, dass in dem stromabwärtigen Leitungs-pneumatischen Steuerabschnitt vorhandene Luft abgelassen wird, wenn der erste und der zweite Kupplungskopf (101, 202) nicht verbunden sind.

3. Die pneumatische Bremsanordnung (100) nach einem der Ansprüche 1 und 2, ferner umfassend:
- Betriebsbremsen (23, 27) des Zugfahrzeugs (T1);
- Betriebsbremsen (227) des Anhängers (T2, T3);
- eine zweite pneumatische Steuerleitung (L2) zum pneumatischen Steuern der Betriebsbremsen (227) des Anhängers von dem Zugfahrzeug aus, wobei die zweite pneumatische Steuerleitung mindestens in einen stromaufwärtigen zweiten pneumatischen Steuerleitungsabschnitt (L21), der an dem Zugfahrzeug montiert ist, und einen stromabwärtigen zweiten pneumatischen Steuerleitungsabschnitt (L22), der an dem Anhänger montiert ist, unterteilt ist, und wobei die pneumatische Steuerleitung einen dritten Kupplungskopf (103), der an dem Zugfahrzeug an einem stromabwärtigen Ende des stromaufwärtigen zweiten pneumatischen Steuerleitungsabschnitts montiert ist, und einen vierten Kupplungskopf (204), der an dem Anhänger an einem stromaufwärtigen Ende des stromabwärtigen zweiten pneumatischen Steuerleitungsabschnitts montiert ist, umfasst; und
- eine Luftversorgungsleitung (L3) zum Versorgen eines pneumatischen Systems des Anhängers mit Versorgungsluft, wobei die Luftversorgungsleitung mindestens in einen stromaufwärtigen Luftversorgungsleitungsabschnitt (L31), der an dem Zugfahrzeug montiert ist, und einen stromabwärtigen Luftversorgungsleitungsabschnitt (L32), der an dem Anhänger montiert ist, unterteilt ist, und wobei die Steuerleitung einen fünften Kupplungskopf (105), der an dem Zugfahrzeug an einem stromabwärtigen Ende des stromaufwärtigen Luftversorgungsleitungsabschnitts montiert ist, und einen sechsten Kupplungskopf (206), der an dem Anhänger an einem stromaufwärtigen Ende des stromabwärtigen Luftversorgungsleitungsabschnitts montiert ist, umfasst wobei der dritte und/oder fünfte Kupplungskopf (103, 105) nicht entlüftete
Kupplungsköpfe sind und ein Rückschlagventil (113) umfassen, das verhindert, dass Luft aus dem stromaufwärtigen zweiten pneumatischen Steuerabschnitt (L21) und/oder aus dem stromaufwärtigen Luftversorgungsleitungsabschnitt (L31) entweicht, wenn der dritte und der vierte Kupplungskopf (103, 204) und/oder der fünfte und der sechste Kupplungskopf (105, 206) nicht verbunden sind.

4. Die pneumatische Bremsanordnung (100) nach Anspruch 3, konfiguriert für ein Fahrzeug (V), das mindestens einen zweiten Anhänger (T3) umfasst, wobei:
- die erste und die zweite pneumatische Steuerleitung (L1, L2) und die Luftversorgungsleitung (L3) sich auf dem zweiten Anhänger erstrecken;
- die erste pneumatische Steuerleitung (L1) einen siebten Kupplungskopf (207), der an dem ersten Anhänger (T2) an einem stromabwärtigen Ende des stromabwärtigen ersten pneumatischen Steuerleitungsabschnitts (L12) montiert ist, und einen achten Kupplungskopf (308), der an einem stromaufwärtigen Ende eines weiteren stromabwärtigen Abschnitts (L13) der ersten pneumatischen Steuerleitung, die an dem zweiten Anhänger (T3) montiert ist, montiert ist, umfasst;
- die zweite pneumatische Steuerleitung (L2) einen neunten Kupplungskopf (209), der an dem ersten Anhänger an einem stromabwärtigen Ende des stromabwärtigen zweiten pneumatischen Steuerleitungsabschnitts (L22) montiert ist, und einen zehnten Kupplungskopf (310), der an einem stromaufwärtigen Ende eines weiteren stromabwärtigen Abschnitts (L32) der zweiten pneumatischen Steuerleitung, die an dem zweiten Anhänger montiert ist, montiert ist, umfasst;
- die Luftversorgungsleitung (L3) einen elften Kupplungskopf (211), der an dem ersten Anhänger an einem stromabwärtigen Ende des stromabwärtigen Luftversorgungsleitungsabschnitts (L32) montiert ist, und einen zwölften Kupplungskopf (312), der an einem stromaufwärtigen Ende eines weiteren stromabwärtigen Abschnitts (L33) der Luftversorgungsleitung, die an dem zweiten Anhänger montiert ist, montiert ist, umfasst.

5. Die pneumatische Bremsanordnung (100) nach einem vorhergehenden Anspruch, ferner umfassend:
- eine erste Ventilanordnung (32), die an dem Zugfahrzeug montiert ist und zum Steuern pneumatischer Bremsaktuatoren (24, 28) des Zugfahrzeugs (T1) konfiguriert ist ;
- eine zweite Ventilanordnung (33), die an dem Zugfahrzeug montiert ist und zum Steuern pneumatischer Bremsaktuatoren (228) des Anhängers (T2) durch die erste pneumatische Steuerleitung (L1) konfiguriert ist.

6. Die pneumatische Bremsanordnung (100) nach Anspruch 5, wobei
- die erste Ventilanordnung (32) ein erstes bistabiles Relaisventil (34) und erste Pilotmagnetventile (36, 38) zum Steuern des ersten bistabilen Relaisventils umfasst; und
- die zweite Ventilanordnung (33) ein zweites bistabiles Relaisventil (35) und zweite Pilotmagnetventile (37, 39) zum Steuern des zweiten bistabilen Relaisventils umfasst.

7. Die pneumatische Bremsanordnung (100) nach Anspruch 3 in Kombination mit einem der Ansprüche 5 und 6, ferner umfassend:
- ein Anhängersteuermodul (40), das an dem Zugfahrzeug (T1) montiert ist und Steuerluft für pneumatische Bremsaktuatoren (228) des Anhängers Versorgungsluft für die Betriebs- und Feststellbremsen (227) des Anhängers und möglicherweise Hilfseinrichtungen bereitstellt;
- ein elektronisches Bremssystem (22), das dem Anhängersteuermodul Steuerluft zum Steuern der Betriebsbremsen des Anhängers bereitstellt;
wobei das Anhängersteuermodul (40) ein Inversions-Relaisventil (42) umfasst, das mit Druckluft versorgt wird von
- dem elektronischen Bremssystem (22) an einem ersten Steuereintrittsport (422) und
- entweder der ersten Ventilanordnung (32) oder einer Quelle (18) von Druckluft an einem zweiten Steuereintrittsport (424),
und wobei das Inversions-Relaisventil (42) die dem dritten Kupplungskopf (103) zugeführte Luft steuert.

8. Die pneumatische Bremsanordnung (100) nach Anspruch 7, ferner umfassend ein Steuermagnetventil (50), das an einer Steuerleitung (L4) angeordnet ist, die mit dem zweiten Eintrittsport (424) des des Inversions-Relaisventils (42) verbunden ist und über eine erste Luftleitung (C2), die mit der Quelle (18) von Druckluft verbunden ist, und über eine zweite Leitung (C4), die mit der ersten Ventilanordnung (32) verbunden ist, mit Luft versorgt wird, wobei das Magnetventil (50) elektronisch gesteuert wird (S75), um zwischen einem ersten Zustand, in dem es die Quelle von Druckluft (18) mit dem zweiten Steuereintrittsport (424) des Inversions-Relaisventils verbindet, und einem zweiten Zustand, in dem es die erste Ventilanordnung (32) mit dem zweiten Eintrittsport des Inversions-Relaisventils verbindet, und umgekehrt umzuschalten.

9. Die pneumatische Bremsanordnung (100) nach Anspruch 8, wobei das Steuermagnetventil (50) zwischen seinem ersten und zweiten Zustand unter Betätigung durch eine elektronische Steuereinheit (70) umschaltet, die auch die erste und die zweite Ventilanordnung (32, 33) steuert.

10. Die pneumatische Bremsanordnung (100) nach einem der Ansprüche 8 und 9, wobei das Steuermagnetventil (50) außerhalb des Lufterzeugungsmoduls (4) des Fahrzeugs (V) angeordnet ist.

11. Die pneumatische Bremsanordnung (100) nach einem der Ansprüche 8 bis 10, ferner umfassend einen Bewegungssensor (80), der an Bord des Zugfahrzeugs (T1) angeordnet ist und ein elektrisches Signal (S80) zum Steuern des Steuermagnetventils (50) in Abhängigkeit davon liefert, ob das Fahrzeug (V) in Bewegung ist oder stillsteht.

12. Die pneumatische Bremsanordnung (100) nach einem der Ansprüche 8 bis 11, ferner umfassend einen Sensor (44), der ein Signal (S₄₄) liefert, das von der ECU (70) verwertet werden kann, um zu beurteilen, ob das Steuermagnetventil (50) korrekt arbeitet.

13. Ein Fahrzeug (V), umfassend ein Zugfahrzeug (T1), mindestens einen Anhänger (T2, T3) und die pneumatische Bremsanordnung (100) nach einem vorhergehenden Anspruch.

14. Ein Verfahren zum Feststellen und Entparken einer Fahrzeugkombination (V), die ein Zugfahrzeug (T1) und mindestens einen Anhänger (T2) umfasst, wobei das Verfahren mindestens den folgenden Schritt umfasst:
a) Betätigen aller Feststellbremsen (23, 27, 227) des Fahrzeugs beim Abstellen des Fahrzeugs durch Bewegen einer ersten Steuervorrichtung (2), die in einer Kabine (C1) des Zugfahrzeugs (T1) angeordnet ist, in eine erste Richtung;
**dadurch gekennzeichnet, dass** das Verfahren auch mindestens die folgenden Schritte umfasst:
b) Lösen der Feststellbremsen des Zugfahrzeugs (T1) beim Entparken des Fahrzeugs durch Bewegen der ersten Steuervorrichtung (2) in eine zweite Richtung, die von der ersten Richtung verschieden ist; und
c) Lösen der Feststellbremsen jedes Anhängers (T2, T3), der an das Zugfahrzeug gekoppelt ist, durch Betätigen einer zweiten Steuervorrichtung (3), die in der Kabine des Zugfahrzeugs angeordnet ist.

15. Das Verfahren nach Anspruch 14, implementiert mit einem Fahrzeug (V), das eine pneumatische Bremsanordnung (100) nach einem der Ansprüche 8 bis 12 beinhaltet, wobei das Verfahren ferner mindestens die folgenden Schritte umfasst:
d) während des Abstellens Beurteilen (S80), ob das Fahrzeug in Bewegung ist oder stillsteht;
e) wenn das Ergebnis von Schritt d) ist, dass das Fahrzeug (V) stillsteht, Halten des Steuermagnetventils (50) in seinem ersten Zustand und Betätigen der Anhänger-Feststellbremsen (228) beim Abstellen des Fahrzeugs durch Bewegen einer ersten Steuervorrichtung (2), die in einer Kabine (C1) des Zugfahrzeugs (T1) angeordnet ist, in eine erste Richtung, ohne die Betriebsbremse der Anhänger anzulegen;
f) wenn das Ergebnis von Schritt d) ist, dass das Fahrzeug in Bewegung ist, Umschalten (S75) des Steuermagnetventils (50) in seinen zweiten Zustand und Verwenden der Betriebsbremsen des Anhängers (T2, T3) beim Abstellen des Zugfahrzeugs (T1) durch Bewegen der ersten Steuervorrichtung (2) in die erste Richtung.

## Revendications

1. Un agencement de frein pneumatique (100) pour un véhicule articulé incluant un tracteur (T1) et au moins une remorque (T2, T3), l'agencement de frein pneumatique comprenant :
- des freins de stationnement (23, 27) du tracteur ;
- des freins de stationnement (227) de la remorque ;
- un module de production d'air (5) monté sur le tracteur ;
- une première ligne de commande pneumatique (L1) pour commander pneumatiquement les freins de stationnement (227) de la remorque depuis le tracteur, l'agencement étant configuré pour, dans une configuration donnée, actionner tous les freins de stationnement (23, 27, 227) en même temps, sur la base d'un ordre de freinage (S₂) reçu depuis la cabine (C1) du tracteur ;
**caractérisé en ce que**
- la première ligne de commande pneumatique est divisée au moins en une première portion de ligne de commande pneumatique amont (L11), montée sur le tracteur, et une première portion de ligne de commande pneumatique aval (L12), montée sur la remorque, et la première ligne de commande incluant une première tête d'accouplement (101) montée sur le tracteur, à une extrémité aval de la première portion de ligne de commande pneumatique amont, et une deuxième tête d'accouplement (202) montée sur la remorque, à une extrémité amont de la première portion de ligne de commande pneumatique aval ; et
- la première tête d'accouplement (101) est une tête d'accouplement avec mise à l'évent, qui permet à de l'air présent dans la portion de ligne de commande pneumatique amont (L11) d'être évacué lorsque les première et deuxième tête d'accouplement (101, 202) ne sont pas connectées.

2. L'agencement de frein pneumatique (100) de la revendication 1, dans lequel la deuxième tête d'accouplement (202) est une tête d'accouplement avec mise à l'évent, qui permet à de l'air présent dans la portion de ligne de commande pneumatique aval d'être évacué lorsque les première et deuxième tête d'accouplement (101, 202) ne sont pas connectées.

3. L'agencement de frein pneumatique (100) de l'une des revendications 1 et 2, comprenant en outre :
- des freins de service (23, 27) du tracteur (T1) ;
- des freins de service (227) de la remorque (T2, T3) ;
- une deuxième ligne de commande pneumatique (L2) pour commander pneumatiquement les freins de service (227) de la remorque depuis le tracteur, la deuxième ligne de commande pneumatique étant divisée au moins en une deuxième portion de ligne de commande pneumatique amont (L21), montée sur le tracteur, et une deuxième portion de ligne de commande pneumatique aval (L22), montée sur la remorque, et la ligne de commande pneumatique incluant une troisième tête d'accouplement (103) montée sur le tracteur, à une extrémité aval de la deuxième portion de ligne de commande pneumatique amont, et une quatrième tête d'accouplement (204) montée sur la remorque, à une extrémité amont de la deuxième portion de ligne de commande pneumatique aval ; et
- une ligne d'alimentation en air (L3) pour alimenter un système pneumatique de la remorque avec de l'air de puissance, la ligne d'alimentation en air étant divisée au moins en une portion de ligne d'alimentation en air amont (L31), montée sur le tracteur, et une portion de ligne d'alimentation en air aval (L32), montée sur la remorque, et la ligne de commande incluant une cinquième tête d'accouplement (105) montée sur le tracteur, à une extrémité aval de la portion de ligne d'alimentation en air amont, et une sixième tête d'accouplement (206) montée sur la remorque, à une extrémité amont de la portion de ligne d'alimentation en air aval
dans lequel les troisième et/ou cinquième têtes d'accouplement (103, 105) sont des têtes d'accouplement sans mise à l'évent et incluent un clapet anti-retour (113) empêchant de l'air de s'échapper de la deuxième portion de commande pneumatique amont (L21) et/ou de la portion de ligne d'alimentation en air amont (L31), lorsque les troisième et quatrième têtes d'accouplement (103, 204) et/ou les cinquième et sixième têtes d'accouplement (105, 206) ne sont pas connectées.

4. L'agencement de frein pneumatique (100) de la revendication 3, configuré pour un véhicule (V) incluant au moins une deuxième remorque (T3), dans lequel :
- les première et deuxième ligne de commande pneumatique (L1, L2) et la ligne d'alimentation en air (L3) s'étendent sur la deuxième remorque ;
- la première ligne de commande pneumatique (L1) inclut une septième tête d'accouplement (207) montée sur la première remorque (T2), à une extrémité aval de la portion de première ligne de commande pneumatique aval (L12) et une huitième tête d'accouplement (308) montée à une extrémité amont d'une autre portion aval (L13) de la première ligne de commande pneumatique montée sur la deuxième remorque (T3) ;
- la deuxième ligne de commande pneumatique (L2) inclut une neuvième tête d'accouplement (209) montée sur la première remorque, à une extrémité aval de la portion de deuxième ligne de commande pneumatique aval (L22) et une dixième tête d'accouplement (310) montée à une extrémité amont d'une autre portion aval (L32) de la deuxième ligne de commande pneumatique montée sur la deuxième remorque ;
- la ligne d'alimentation en air (L3) inclut une onzième tête d'accouplement (211) montée sur la première remorque, à une extrémité aval de la portion de ligne d'alimentation en air aval (L32) et une douzième tête d'accouplement (312) montée à une extrémité amont d'une autre portion aval (L33) de la ligne d'alimentation en air montée sur la deuxième remorque.

5. L'agencement de frein pneumatique (100) de l'une quelconque revendication précédente, comprenant en outre :
- un premier agencement de soupape (32), monté sur le tracteur et configuré pour commander des actionneurs de frein pneumatiques (24, 28) du tracteur (T1) ;
- un deuxième agencement de soupape (33), monté sur le tracteur et configuré pour commander des actionneurs de frein pneumatiques (228) de la remorque (T2) via la première ligne de commande pneumatique (L1).

6. L'agencement de frein pneumatique (100) de la revendication 5, dans lequel
- le premier agencement de soupape (32) inclut une première soupape relais bistable (34) et des premières électrovannes pilotes (36, 38) pour commander la première soupape relais bistable ; et
- le deuxième agencement de soupape (33) inclut une deuxième soupape relais bistable (35) et des deuxièmes électrovannes pilotes (37, 39) pour commander la deuxième soupape relais bistable.

7. L'agencement de frein pneumatique (100) de la revendication 3 combinée avec l'une des revendications 5 et 6, comprenant en outre :
- un module de commande de remorque (40) monté sur le tracteur (T1) et fournissant de l'air de commande pour des actionneurs de frein pneumatiques (228) de la remorque de l'air de puissance pour les freins de service et de stationnement (227) de la remorque et éventuellement des auxiliaires ;
- un système de freinage électronique (22) fournissant de l'air de commande au module de commande de remorque pour commander les freins de service de la remorque ;
dans lequel le module de commande de remorque (40) inclut une soupape relais d'inversion (42) alimentée en air sous pression depuis
- le système de freinage électronique (22) sur un premier orifice d'entrée de commande (422) et
- soit le premier agencement de soupape (32) soit une source (18) d'air sous pression sur un deuxième orifice d'entrée de commande (424),
et dans lequel la soupape relais d'inversion (42) contrôle l'air fourni à la troisième tête d'accouplement (103).

8. L'agencement de frein pneumatique (100) de la revendication 7, comprenant en outre une électrovanne de commande (50) agencée sur une ligne de commande (L4) connectée au deuxième orifice d'entrée (424) de la de la soupape relais d'inversion (42) et alimentée en air via un premier conduit d'air (C2) connecté à la source (18) d'air sous pression et via un deuxième conduit (C4) connecté au premier agencement de soupape (32), dans lequel l'électrovanne (50) est commandée électroniquement (S75) pour commuter entre un premier état, où elle connecte la source d'air sous pression (18) au deuxième orifice d'entrée de commande (424) de la soupape relais d'inversion, et un deuxième état, où elle connecte le premier agencement de soupape (32) au deuxième orifice d'entrée de la soupape relais d'inversion, et vice-versa.

9. L'agencement de frein pneumatique (100) de la revendication 8, dans lequel l'électrovanne de commande (50) commute entre ses premiers et deuxièmes états sous actionnement par une unité de commande électronique (70), qui commande également les premier et deuxième agencement de soupape (32, 33).

10. L'agencement de frein pneumatique (100) de l'une quelconque des revendications 8 et 9, dans lequel l'électrovanne de commande (50) est située à l'extérieur du module de production d'air (4) du véhicule (V).

11. L'agencement de frein pneumatique (100) de l'une quelconque des revendications 8 à 10, comprenant en outre un capteur de mouvement (80) situé à bord du tracteur (T1) et délivrant un signal électrique (S80) pour commander l'électrovanne de commande (50) selon que le véhicule (V) est en mouvement ou à l'arrêt.

12. L'agencement de frein pneumatique (100) de l'une quelconque des revendications 8 à 11, comprenant en outre un capteur (44) délivrant un signal (S₄₄) exploitable par l'ECU (70) pour évaluer si l'électrovanne de commande (50) fonctionne correctement.

13. Un véhicule (V) comprenant un tracteur (T1), au moins une remorque (T2, T3) et l'agencement de frein pneumatique (100) selon l'une quelconque revendication précédente.

14. Un procédé pour stationner et déstationner un véhicule articulé (V) incluant un tracteur (T1) et au moins une remorque (T2), le procédé comprenant au moins l'étape suivante :
a) actionner tous les freins de stationnement (23, 27, 227) du véhicule, lors du stationnement du véhicule, en déplaçant un premier dispositif de commande (2) situé dans une cabine (C1) du tracteur (T1) dans une première direction ;
**caractérisé en ce que** le procédé comprend également au moins les étapes suivantes :
b) relâcher les freins de stationnement du tracteur (T1), lors du déstationnement du véhicule, en déplaçant le premier dispositif de commande (2) dans une deuxième direction, différente de la première direction ; et
c) relâcher les freins de stationnement de toute remorque (T2, T3) accouplée au tracteur en actionnant un deuxième dispositif de commande (3) situé dans la cabine du tracteur.

15. Le procédé de la revendication 14, mis en œuvre avec un véhicule (V) incorporant un agencement de frein pneumatique (100) selon l'une des revendications 8 à 12, dans lequel le procédé comprend en outre au moins les étapes suivantes :
d) pendant le stationnement, évaluer (S80) si le véhicule est en mouvement ou à l'arrêt ;
e) si le résultat de l'étape d) est que le véhicule (V) est à l'arrêt, maintenir l'électrovanne de commande (50) dans son premier état et actionner les freins de stationnement de remorque (228), lors du stationnement du véhicule, en déplaçant un premier dispositif de commande (2) situé dans une cabine (C1) du tracteur (T1) dans une première direction, sans appliquer le frein de service des remorques ;
f) si le résultat de l'étape d) est que le véhicule est en mouvement, commuter (S75) l'électrovanne de commande (50) à son deuxième état et utiliser les freins de service de la remorque (T2, T3), lors du stationnement du tracteur (T1), en déplaçant le premier dispositif de commande (2) dans la première direction.
